(19) Europäisches Patentamt

European Patent Office

Office européen des brevets

(11) **EP 0 816 460 B1**

(12) **FASCICULE DE BREVET EUROPEEN**

(45) Date de publication et mention
de la délivrance du brevet:
**28.05.2003   Bulletin 2003/22**

(51) Int Cl.⁷: **C09J 151/06**, C08F 255/02,
C08F 8/46, B32B 27/08

(21) Numéro de dépôt: **97401395.5**

(22) Date de dépôt: **18.06.1997**

(54) **Liant de coextrusion, son utilisation pour une structure multicouche et la structure ainsi obtenue**

Coextrusionsbindemittel, seine Verwendung für Mehrschichtstrukturen und Mehrschichtstrukturen daraus hergestellt

Coextrusion binder, its use for multi-layered structure and the structure thus obtained

(84) Etats contractants désignés:
**AT BE CH DE ES FI FR GB IT LI NL SE**

(30) Priorité: **27.06.1996  FR 9608004**

(43) Date de publication de la demande:
**07.01.1998   Bulletin 1998/02**

(73) Titulaire: **Atofina**
**92800 Puteaux (FR)**

(72) Inventeurs:
• **Jacquemet, Régis**
**27000 Evreux (FR)**

• **Le Roy, Christophe**
**27000 Evreux (FR)**

(74) Mandataire: **Neel, Henry**
**Atofina**
**D.C.R.D./D.P.I.**
**4, Cours Michelet**
**La Défense 10**
**92091 Paris La Défense Cedex (FR)**

(56) Documents cités:
**EP-A- 0 035 392         EP-A- 0 323 650**
**EP-A- 0 365 266         EP-A- 0 501 762**

**Description**

La présente invention concerne un liant de coextrusion, son utilisation pour faire une structure multicouche et la structure ainsi obtenue.

Plus précisément le liant de coextrusion de la présente invention comprend :

- au moins un polymère (A) comprenant au moins 75% en mole d'éthylène et qui a un rapport $MI_2/[\eta]^{-8,77}$ en valeur absolue supérieur à 15, A étant un copolymère d'èthylène et d'une alphaoléfine de type LLDPE ou VLDPE
- au moins un polymère (B) différent de (A) choisi parmi :

  . les polymères (B1) comprenant au moins 50% en mole d'éthylène,
  . les copolymère (B2) blocs du styrène,
  (B) a un rapport $MI_2/[\eta]^{-8,77}$ en valeur absolue supérieur à 15, le polymère (B) représente 20 à 30% en poids de (A) + (B)

- le mélange de (A) et (B) étant greffé par un acide carboxylique insaturé ou un dérivé fonctionnel de cet acide,
- le mélange cogreffé de (A) et (B) étant éventuellement dilué dans un polymère (C) choisi parmi

  . les polymères (C1) de l'éthylène homo- ou copolymères
  . les copolymères (C2) blocs du styrène, le poids de (C) est au plus égal au poids de (A+B) greffés

- le liant ayant

  (a) une teneur en éthylène qui n'est pas inférieure à 70% en mole,
  (b) une teneur en acide carboxylique, ou en son dérivé, de 0,01 à 10% en poids rapportée au poids du liant, et
  (c) un rapport $MI_{10}/MI_2$ de 5 à 20, où $MI_2$ est l'indice d'écoulement en masse fondue à 190°C sous une charge de 2,160 kg, mesuré suivant ASTM D1238, $MI_{10}$ est l'indice d'écoulement en masse fondue à 190°C sous une charge de 10 kg, mesuré suivant ASTM D1238. La viscosité intrinsèque $[\eta]$ désigne l'indice de viscosité intrinsèque (dl/g) d'un polymère, mesurée dans une solution de décaline à 135°C.

La présente invention concerne aussi une structure multicouche comprenant une couche comprenant le liant de coextrusion défini ci-dessus, et directement attachée à celle-ci une couche (E) de résine polaire azotée ou oxygénée telle qu'une couche d'une résine polyamide, d'un copolymère saponifié d'éthylène et d'acétate de vinyle (EVOH) ou d'une résine polyester, ou bien une couche métallique.

L'invention concerne aussi une structure comprenant la structure précédente et directement attachée à celle-ci, du côté du liant, soit une couche (F) de polyoléfine, soit une couche d'une résine choisie parmi les résines de la couche (E) soit encore une couche métallique.

Ces structures sont utiles pour fabriquer des emballages souples ou rigides tels que des sachets, des bouteilles pour des produits alimentaires. On peut fabriquer ces emballages par coextrusion, laminage, coextrusion soufflage.

L'art antérieur EP 35392 décrit des liants de coextrusion constitués par:

(i) 1 à 100% en poids d'une résine éthylénique modifiée par greffage provenant d'un polymère éthylénique qui contient 0 à 15% en mole d'au moins une alpha-oléfine ayant 3 à 30 atomes de carbone, comme comonomère, et qui a un rapport $MI_2/[\eta]^{-8,77}$ qui, en valeur absolue, n'est pas inférieur à 15, et une densité de 0,88 à 0,98 g/cm³, et
(ii) 99 à 0% en poids d'un polymère éthylénique non modifié contenant 0 à 50% en mole d'au moins une alpha-oléfine ayant 3 à 30 atomes de carbone, comme comonomère, et qui a un rapport $MI_2/[\eta]^{-,877}$ qui, en valeur absolue, n'est pas inférieur à 15, et une densité de 0,86 à 0,96 g/cm³,

et qui ont

(a) une teneur en éthylène d'au moins 80% en mole
(b) une teneur en acide carboxylique (ou son dérivé) comprise entre 0,01 et 10% en poids du liant
(c) une densité de 0,88 à 0,98 g/cm³ et
(d) un rapport $MI_{10}/MI_2$ de 5 à 18.

Le document EP501,762 divulgue une composition de résine adhésive obtenue en mélangeant 55-5% en poids d'une résine polyoléfine cristalline (A) et 45-95% en poids d'un copolymère de l'éthylène et d'une α-oléfine (B), amorphe ou de basse cristallinité, (A) et (B) étant cogreffés par un acide carboxylique insaturé ou ses dérivés puis dilué dans une résine polyoléfine cristalline (E).

Toutefois la demanderesse a trouvé que ces liants présentaient des infondus ce qui peut entraîner des délaminations dans les structures comprenant ces liants. La demanderesse a trouvé que le cogreffage, c'est-à-dire le greffage du mélange de (A) et (B) produisait des liants pratiquement sans infondus.

S'agissant du polymère (A) c'est un copolymère de l'éthylène et d'une alphaoléfine de type LLDPE ou VLDPE. Les alphaoléfines sont avantageusement celles ayant de 3 à 30 atomes de carbone.

Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décéne, 1-dodécène, 1-tétradécène, 1-hexadécène, 1-octadécène, 1-eicocène, 1-dococène, 1-tétracocéne, 1-hexacocène, 1-octacocène, et 1-triacontène. Ces alpha-oléfines peuvent être utilisées seules ou en mélange de deux ou de plus de deux.

La densité de (A) est avantageusement comprise entre 0,88 et 0,98 g/cm$^3$.

(A) est un copolymère de l'éthylène et d'une alphaoléfine de type LLDPE (polyéthylène basse densité linéaire) ou VLDPE (polyéthylène de très basse densité). S'agissant des polymères (B), (B1) peut être choisi parmi les polyéthylènes, les copolymères de l'éthylène et d'au moins un comonomère qui peut être le même que les comonomères cités pour (A) et aussi un diène.

A titre d'exemple de polymères (B1) on peut citer les caoutchoucs des copolymères éthylène/propylène, éthylène/propylène/diène, éthylène/1-butène, éthylène/ 1-butène/diène, éthylène/propylène/1-butène/diène, éthylène/4-méthyl-1-pentène, et des mélanges d'au moins deux de ces caoutchoucs entre eux.

(B2) peut être aussi un copolymère à blocs styrène/butadiène/styrène (SBS), à blocs styrène/éthylène-butène/styrène (SEBS) ou encore à blocs styrène/isoprène/styrène (SIS).

La densité de (B) est avantageusement comprise entre 0,86 et 0,96 g/cm$^3$.

C'est-à-dire que (B) représente une gamme de polymères allant des résines thermoplastiques aux élastomères. De préférence (B) est un élastomère, les caoutchoucs des copolymères éthylène/propylène et le caoutchouc de copolymères éthylène/1-butène sont ceux que l'on préfère le plus. De préférence, le caoutchouc de copolymère éthylène/propylène et le caoutchouc de copolymère éthylène/1-butène ont un indice d'écoulement en masse fondue (mesuré à 190°C selon ASTM D1238-65T) de 0,1 à 20, et une teneur en éthylène de 60 à 90% en mole.

Le mélange de (A) et (B) est greffé avec un acide carboxylique insaturé ou un dérivé fonctionnel de cet acide.

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique. citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique.

Des exemples d'autres monomères de greffage comprennent des esters alkyliques en $C_1$-$C_8$ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium. On préfère l'anhydride maléique.

Divers procédés connus peuvent être utilisés pour greffer un monomère de greffage sur le mélange de (A) et (B).

Par exemple, ceci peut être réalisé en chauffant les polymères (A) et (B) à température élevée, environ 150° à environ 300°C, en présence ou en l'absence d'un solvant avec ou sans initiateur de radicaux. Des solvants appropriés qui peuvent être utilisés dans cette réaction sont le benzène, toluène, xylène, chlorobenzène, cumène, etc. Des initiateurs de radicaux appropriés qui peuvent être utilisés comprennent le t(butyl-hydroperoxyde, cumène-hydroperoxyde, di-iso-propyl-benzène-hydroperoxyde, di-t-butyl-peroxyde, t-butyl-cumyl-peroxyde, (dicumyl-peroxyde, 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde, et méthyl-éthyl-cétone-peroxyde.

Dans le mélange de (A) et (B) modifié par greffage obtenu de la façon susmentionnée, la quantité du monomère de greffage peut être choisie d'une façon appropriée mais elle est de préférence de 0,01 à 10%, mieux de 0,1 à 5%, par rapport au poids de (A) et (B) greffés.

La quantité du monomère greffé est déterminée par dosage des fonctions succiniques par spectroscopie IRTF.

Le mélange de (A) et (B) cogreffé peut être dilué dans un polymère (C) choisi parmi :

- (C1) les polyéthylènes ou les copolymères de l'éthylène avec un monomère choisi parmi les alphaoléfines, les esters d'acides carboxyliques insaturés ou les esters vinyliques d'acides carboxyliques saturés. Ces monomères ont déjà été cités dans la définition de (A).
- (C2) les copolymères blocs du styrène tels que le SBS, SEBS ou le SIS.

De préférence (C) est choisi parmi la famille des polymères (A) c'est-à-dire qu'il répond aux conditions de teneur en éthylène, $MI_2/[\eta]^{-8,77}$ et densité, il peut cependant être différent du polymère (A) qui est destiné à être cogreffé avec (B).

Le liant doit aussi satisfaire aux conditions (a), (b) et (c) à savoir respectivement la teneur en éthylène, la teneur en acide carboxylique et la condition du rapport $MI_{10}/MI_2$. La condition (a) limite la quantité de (B), en pratique (B) représente 20 à 30% en poids du mélange (A) + (B). La condition (b) limite la quantité de (C). De préférence la quantité d'acide carboxylique ou son dérivé est de 0,1 à 5% du poids du liant c'est-à-dire de ((A)+(B)) greffés + (C). En pratique le poids de (C) est au plus égal au poids de [A+B] greffés.

Quant à la condition (C) elle est respectée soit parce que ((A)+(B)) greffé et le polymère (C) vérifient cette condition soit parce que le mélange de (A+B) greffé et (C) la vérifient. Par exemple (A+B) greffé et (C) pris séparément ne respectent pas cette condition mais leur mélange la respecte, (A+B) greffé la respecte et (C) ne la respecte pas ou (C) la respecte et (A+B) greffé ne la respecte pas.

Avantageusement la densité du liant est comprise entre 0,88 et 0,98 g/cm³.

Le mélange de (A) et (B) peut être effectué préalablement au greffage ou simultanément avec le monomère à greffer et l'initiateur.

Après le greffage, on ajoute éventuellement (C). On peut utiliser les techniques habituelles de mélange des thermoplastiques à l'état fondu.

Le liant de l'invention peut comprendre encore divers additifs tels que des antioxydants, des absorbeurs d'ultra-violets, des agents antistatiques, des pigments, des colorants, des agents de nucléation, des charges, des agents de glissement, des lubrifiants, des produits ignifuges et des agents anti-blocage.

Les exemples d'anti-oxydants sont le 2,6-di-t-butyl-p-crésol, O-t-butyl-p-crésol, tétrakis-[méthylène-3-(3,5-di-t-butyl-4-hydroxyphényl)propionate]méthane, la p-naphtylamine, et la paraphénylènediamine.

Les exemples d'absorbeurs d'ultra-violets sont la 2,4-dihydroxybenzophénone, le 2-(2'-hydroxy-3',5'-di-t-butylphényl)-5-chlorobenzotriazole, 2-(2-hydroxy-3-t-butyl-5-méthylphényl)-5-chlorobenzotriazole, et le bis(2,2',6,6')-tétraméthyl-4-pipéridine)sébacate.

Les exemples d'agents antistatiques sont la lauryldiéthanolamine, palmityl-diéthanolamine, stéaryl-di-éthanolamine, oléyl-diéthanolamine, béhényldiéthanolamine, polyoxyéthylène-alkylamines, le stéaryl-monoglycéride, et la 2-hydroxy-4-n-octoxybenzophénone.

Les exemples de colorants comprenant des pigments et des colorants sont le noir de carbone, blanc de titane, jaune de cadmium et bleu de phtalocyanine de cuivre.

Les exemples d'agents de nucléation sont le p-tert.-butylbenzoate d'aluminium, dibenzylidène-sorbitol, et hydroxy-di-p-t-butylbenzoate d'aluminium.

Les exemples de charge sont les fibres de verres, fibres de carbone, talc, argile, silice, carbonate de calcium, sulfate de baryum, hydroxyde de magnésium, hydroxyde de calcium et oxyde de calcium.

Les exemples d'agents de glissement sont le stéaramide, oléamide et érucinamide.

Les exemples de lubrifiants sont le stéarate de calcium, stéarate de zinc, stéarate d'aluminium, stéarate de magnésium, et cire de polyéthylène.

Les exemples de produits ignifuges sont l'oxyde d'antimoine, le décabromobiphényl-éther, et la bis(3,5-dibromo-4-bromopropyloxyphényl)sulfone.

Les exemples d'agents anti-blocage sont le dioxyde de silicium et le polystyrène.

Les quantités de ces autres additifs peuvent être choisies parmi les quantités appropriées qui n'affectent pas d'une façon défavorable les liants de l'invention. Par exemple, rapportées au poids total de (A+B) greffé + (C) les quantités appropriées sont d'environ 0,01 à environ 5% en poids pour les antioxydants ; environ 0,01 à environ 5% en poids pour les absorbeurs d'ultraviolets ; environ 0,01 à environ 1% en poids pour les agents antistatiques ; environ 0,01 à environ 5% en poids pour les agents colorants ; environ 0,01 à environ 5% en poids pour les agents de nucléation ; environ 0,1 à environ 60% en poids pour les charges ; environ 0,01 à environ 1% en poids pour les agents de glissement ; environ 0,01 à environ 1% en poids pour les lubrifiants environ 0,1 à environ 50% en poids pour les produits ignifuges ; et environ 0,01 à environ 30% en poids pour les agents anti-blocage.

La structure multicouche de la présente invention est constituée par la couche comprenant le liant précédent, et par une couche (E) de résine polaire oxygénée ou azotée, ou une couche métallique.

Des exemples de résines polaires préférées dans la couche autre que le liant sont les résines de polyamide, un copolymère saponifié d'éthylène et d'acétate de vinyle, et les polyesters.

Plus spécifiquement, elles comprennent des polyamides synthétiques à longue chaîne ayant des motifs structurels du groupe amide dans la chaîne principale, tels que le PA-6, PA-6,6, PA-6,10, PA-11 et le PA-12 ; un copolymère saponifié d'éthylène et d'acétate de vinyle ayant un degré de saponification d'environ 90 à 100% en moles, obtenu en saponifiant un copolymère éthylène/acétate de vinyle ayant une teneur en éthylène d'environ 15 à environ 60% en moles ; des polyesters tels que le polyéthylène-téréphtalate, le polybutylène-téréphtalate, le polyéthylène naphténate et des mélanges de ces résines.

La couche métallique peut être par exemple une feuille, une pellicule ou une feuille d'un métal tel que l'aluminium, le fer, le cuivre, l'étain et le nickel, ou un alliage contenant au moins un de ces métaux comme constituant principal. L'épaisseur de la pellicule ou de la feuille peut être convenablement choisie et elle est par exemple d'environ 0,01 à environ 0,2 mm. Il est de pratique courante de dégraisser la surface de la couche métallique avant de laminer sur elle le liant de l'invention. La couche de résine polaire oxygénée ou azotée (E) peut contenir également des additifs connus en quantité classique.

L'invention concerne aussi une structure comprenant respectivement une couche (F) de polyoléfine une couche du liant de l'invention et soit une couche (E) de résine polaire azotée ou oxygénée soit une couche métallique.

Selon une forme particulière, l'invention concerne une structure comprenant respectivement une couche de polyéthylène haute densité (PEHD), une couche du liant de l'invention et une couche de polyamide ou d'alliage de polyoléfine et de polyamide. De préférence cette dernière couche est un polyamide de type PA amorphe ; par exemple, SELAR PA 3426 ou GRIVORY G21. Les MFI sont par exemple, PEHD : MFI = 0,8 à 190° C ; 2,16 kg, liant : MFI = 1. Avantageusement elle se présente sous forme de corps creux rigides de volume 0,1 à 5 litres ayant la couche de PEHD à l'extérieur. Les épaisseurs sont respectivement (µm) en commençant par le PEHD : 200 à 500/10 à 40/20 à 70. Ces flacons permettent de conserver des jus de fruits frais à température ambiante pendant 12 semaines. La couche de PEHD peut être remplacée par deux couches, l'une extérieure en PEHD vierge, l'autre en produit recyclé provenant des chutes et des découpes lors de l'extrusion soufflage des coupes creux.

Selon une autre forme particulière, l'invention concerne une structure comprenant respectivement une couche de PEHD, une couche du liant de l'invention, une couche d'EVOH ou d'un alliage d'EVOH, une couche du liant de l'invention et une couche de PEHD. Avantageusement elle se présente sous forme de corps creux rigides de volume 0,1 à 5 litres. Les épaisseurs (en µm) sont respectivement en commençant par la couche extérieure de PEHD : 200 à 500 / 10 à 40 / 20 à 50 / 10 à 40 / 40 à 100 (extérieur)     (intérieur)

Le MFI du PEHD est de préférence 0,3 à 0,8 à 190° C ; 2,16 kg

Le MFI de l'EVOH est de préférence 1,7 à 4 à 190° C ; 2,16 kg

Les couches de PEHD peuvent contenir des pigments ou des colorants.

Avantageusement la couche extérieure de PEHD peut être remplacée par deux couches, l'une extérieure en PEHD vierge éventuellement colorée, l'autre en produit recyclé provenant des chutes et des découpes lors de l'extrusion soufflage de ces corps creux. L'épaisseur de la couche extérieure de PEHD ajoutée à l'épaisseur de la couche de recyclé est essentiellement la même que dans le cas d'une seule couche extérieure de PEHD. De préférence la couche recyclée est chargée en noir de carbone pour faire écran à la lumière. Cette structure barrière à la lumière, à l'oxygène grâce à la couche d'EVOH permet la conservation des arômes de fruits à température ambiante pendant au moins 6 mois.

Les structures précédentes :

PEHD/liant/EVOH/liant/PEHD (intérieur)
et PEHD/recyclé/liant/EVOH/liant/PEHD (intérieur) ont aussi l'avantage d'être recyclables, ces corps creux peuvent être broyés et refondus pour former la couche intermédiaire entre la couche de PEHD extérieure et la couche de liant dans des structures :
PEHD / Recyclé / liant / EVOH ou polyamide
PEHD / Recyclé / liant / EVOH ou polyamide / liant / PEHD
    (intérieur)

Il faut cependant veiller à ce que la couche de recyclé soit constituée d'au moins 50% en poids de PEHD et ne présente pas de lamelles d'EVOH conduisant à une délamination.

L'invention concerne aussi une structure comprenant respectivement une couche (F) d'EVOH, une couche du liant de l'invention et une couche (E) de résine polaire azotée ou oxygénée.

Selon une forme particulièrement avantageuse, la structure comprend respectivement une couche de polypropylène, une couche d'un polypropylène greffé comme liant, une couche d'EVOH, une couche du liant de l'invention et une couche de polyamide ou d'un alliage de polyamide. Elle est utile pour faire des corps creux rigides de volume 0,1 à 5 litres ayant la couche de polypropylène à l'extérieur. Le polypropylène peut être un homo- ou copolymère majoritaire en propylène. Le polypropylène greffé utile comme liant entre la couche extérieure et l'EVOH est par exemple un polypropylène greffé par l'anhydride maléique (MAH) (contenant 0,2 % de MAH) et ayant un MFI de 2 à 5 à 230° C, 2,16 kg. On peut choisir des grades de polypropylène et de polyamide très transparents, à titre d'exemple si le polypropylène de la couche extérieure est de type 3022GT3 et le polyamide de la couche intérieure de type SELAR PA3426, la structure est parfaitement transparente.

Les épaisseurs peuvent être respectivement (en μm) en commençant par le polypropylène :

250 à 400 / 20 à 50 / 20 à 50 / 20 à 50 / 30 à 100

(intérieur)

Comme pour les précédentes structures, la couche extérieure de polypropylène peut être remplacée par une couche extérieure de polypropylène vierge et une couche de produit recyclé provenant des chutes et des découpes.

Les corps creux dérivés de cette structure permettent la conservation des jus de fruits 12 mois à température 20°C.

Ces corps creux rigides peuvent être fabriqués par la technique de l'extrusion soufflage.

Les structures de l'invention sauf celles contenant du métal, qu'elles soient sous forme de corps creux usagés ou de paraisons ou autres, sont recyclables soit comme expliqué précédemment directement au cours de la fabrication des corps creux soit par mélange dans du PEHD ou du polypropylène (selon leur contenu) pour fabriquer toutes sortes de produits soufflés ou injectés. En effet la présence du liant de l'invention et éventuellement du polypropylène greffé permet de compatibiliser l'EVOH et/ou le polyamide. Ces corps creux sont faciles à fabriquer, recyclables et ont des propriétés presque identiques de barrière à l'oxygène et aux arômes aux matériaux traditionnels tels que le verre ou l'aluminium. Les emballages en verre peuvent être recyclés mais il faut utiliser des températures élevées (1000°C ou plus) et leur poids est élevé comparé aux structures de l'invention. Les emballages comprenant de l'aluminium comprennent aussi des thermoplastiques tels que du polyéthylène et/ou du papier ou du carton, la séparation de l'aluminium est impossible.

Exemples

Exemple 1

a) Liant selon l'invention

A-1 désigne un copolymère éthylène-octène à 3,5% mole d'octène, de densité 0,920
B1-1 désigne un copolymère éthylène propylène à 15,4% mole de propylène de densité 0,890

et de propriétés :

| | $MI_2$ | $\eta$ | $MI_2/[\eta]^{-8,77}$ |
|---|---|---|---|
| A-1 | 4,4 | 1,3 | 43,9 |
| B1-1 | 0,2 | 2,6 | 871,5 |
| $MI_2$ = Melt index sous 2,16 kg | | | |

On mélange 75 parties de A-1 et 25 parties de B1-1 qu'on greffe par de l'anhydride maléique (MAH), la quantité de MAH greffée est de 0,36% en poids.

La quantité de (C) est 0.

b) Liants non conformes à l'invention

On greffe séparément A-1 et B1-1 et on prépare différents liants désignés Produit 1, produit 2 et produit 3. Le produit 3 est conforme à EP 35392.

Le Tableau 1 suivant présente les avantages du liant de l'invention en terme d'infondus. Dans ce tableau "gr MAH" veut dire "greffé par l'anhydride maléique", les % sont en poids.

EP 0 816 460 B1

| Composition | (75% A-1 + 25% B1-1)gr MAH | (75% A-1)gr MAH (25% B1-1)gr MAH | 75% A-1 (25% B1-1)gr MAH | (75% A-1)gr MAH 25% B1-1 |
|---|---|---|---|---|
| Anhydride maléique greffé (%) | 0,2 - 0,36 | 0,22 | 0,044 | 0,15 |
| $MI_2$ (190°C/2,16 kg) | 0,85 | 0,87 | 1,6 | 0,67 |
| Nombre d'infondus dans les films extrudés* épaisseur film - 150 µm - 50 µm | 40 40 | (perforé) > 200 | (perforé) 120 | (perforé) >220 |
| Nombre d'infondus sur des films Thoret de 50 µm petites (<200 µm) moyennes grandes (>800 µm) | 40 0 0 | > 100 > 100 0 | 80 40 0 | >100 >100 20 |

*Nombre d'infondus dans des films extrudés de 17 cm x 100 cm

### Exemple 2

On a fabriqué un corps creux rigide avec la structure 3 couches :

PEHD/liant/PA (intérieur)
d'épaisseurs respectives ($\mu$m) 420 30 50
sur une souffleuse BEKUM 3 couches de type BAE3.

Le PEHD est de type 2008 SN60 MFI = 0,8 à 190° C ; 2,16 kg densité 0,96
Le liant est celui de l'exemple 1a et permet d'obtenir une excellente adhérence entre PE et PA.
Le PA est une PA amorphe de type SELAR PA 3426.
La conservation des arômes de jus de fruits est de 12 semaines.

### Exemple 3

On a fabriqué un corps creux rigide avec la structure 5 couches
PEHD / liant / EVOH / liant / PEHD (intérieur)
240 30 35 30 50 (épaisseurs respectives en $\mu$m)
en souffleuse BEKUM 5 couches
Le PEHD est du type 2008 SN 60
Le liant est celui de l'exemple 1a et permet d'obtenir une excellente adhérence entre
PE et EVOH, il contient 29 % molaire d'éthylène et son MFI est 1,7 à 190° C sous
2,16 kg, et permet d'obtenir un bon effet barrière aux gaz dans les structures multicouches.
Cette structure permet d'atteindre une durée de conservation des arômes de jus de fruit de 6 mois.
Les déchets de production peuvent être recyclés éventuellement dans une 6e couche et dans ce cas, on réalise une structure du type
PEHD / recyclé / liant / EVOH / liant / PEHD (épaisseurs respectives en $\mu$m) 120 120 30 35 30 50

### Exemple 4

On a fabriqué un corps creux rigide avec la structure 5 couches :

du type : PP / PP-FT / EVOH / liant / PA Selar (intérieur)
avec les épaisseurs suivantes (en $\mu$m) : 340 30 50 30 50
sur souffleuse BEKUM 5 couches

Le PP est du type 3022GT3 d'APPRYI (transparent)

$$MFI = 2 \text{ à } 230°C ; 2,16 \text{ kg}$$

Le liant selon l'exemple 1a permet d'obtenir une excellente adhérence entre EVOH et PA.
PP - FT désigne un liant en polypropylène (PP) de MFI 4 (230° C- 2,16 kg) greffé par l'anhydride maléique, il permet d'obtenir une excellente adhérence entre PP et EVOH.
L'EVOH est du type SOARNOL DT
Cette bouteille multicouche a une bonne transparence.
Cette structure 5 couches permet d'atteindre une durée de conservation des arômes de jus de fruits de 12 mois.
PA SELAR désigne le PA selon 3426, en couche interne il a une bonne inertie chimique, et de ce fait, permet d'obtenir de meilleurs résultats pour les tests organoleptiques que l'EVOH ou le PP.

## Revendications

1. Liant de coextrusion comprenant

   - au moins un polymère (A) comprenant au moins 75% en mole d'éthylène et qui a un rapport $MI_2/[\eta]^{-8,77}$ en valeur absolue supérieur à 15, (A) étant un copolymère d'éthylène et d'une alphaoléfine de type LLDPE ou VLDPE
- au moins un polymère (B) différent de A choisi parmi

  - les polymères (B1) comprenant au moins 50% en mole d'éthylène,
  - les copolymères (B2) blocs du styrène
    (B) a un rapport $MI_2/[\eta]^{-8,77}$ en valeur absolue supérieur à 15, le polymère (B) représente 20 à 30% en poids de (A) + (B)

- le mélange de (A) et (B) étant greffé par un acide carboxylique insaturé ou un dérivé fonctionnel de cet acide
- le mélange cogreffé de (A) et (B) étant éventuellement dilué dans un polymère (C) choisi parmi

  - les polymères (C1) de l'éthylène homo- ou copolymères
  - les copolymères (C2) blocs du styrène
    le poids de (C) est au plus égal au poids de (A + B) greffés
- le liant ayant

  (a) une teneur en éthylène qui n'est pas inférieure à 70% en mole
  (b) une teneur en acide carboxylique ou en son dérivé, de 0,01 à 10% en poids du liant et
  (c) un rapport de $MI_{10}/M_2$ de 5 à 20 où $MI_2$ est l'indice d'écoulement en masse fondue à 190°C sous une charge de 2,16 kg, mesuré suivant ASTM D1238, et $MI_{10}$ est l'indice d'écoulement en masse fondue à 190°C sous une charge de 10 kg mesuré suivant ASTM D1238, la viscosité intrinsèque $[\eta]$ désignant l'indice de viscosité dl/g d'un polymère mesuré dans une solution de décaline à 135°C.

2. Liant selon la revendication 1 dans lequel (B) est un élastomère éthylène/propylène ou éthylène/1-butène.

3. Liant selon l'une quelconque des revendications précédentes dans lequel (C) est choisi parmi la famille du polymère (A).

4. Structure multicouche comprenant une couche comprenant le liant de l'une quelconque des revendications précédentes, et directement attachée à celle-ci une couche (E) de résine polaire azotée ou oxygénée telle qu'une couche de résine polyamide, d'un copolymère saponifié et éthylène et d'acétate de vinyle (EVOH) ou d'une résine polyester, ou bien une couche métallique.

5. Structure selon la revendication 4 dans laquelle est directement attachée, du côté du liant, soit une couche (F) de polyoléfine, soit une couche d'une résine choisie parmi les résines de la couche (E) soit une couche métallique.

6. Structure selon la revendication 5 comprenant respectivement une couche de polyéthylène haute densité, une couche du liant de l'invention et une couche de polyamide ou d'alliage de polyoléfine et de polyamide.

7. Structure selon la revendication 5 comprenant respectivement une couche de PEHD, une couche du liant de l'invention, une couche d'EVOH ou d'un alliage d'EVOH, une couche du liant de l'invention et une couche de PEHD.

8. Structure selon la revendication 5 comprenant respectivement une couche de polypropylène, une couche de polypropylène greffé comme liant, une couche d'EVOH, une couche du liant de l'invention et une couche de polyamide ou d'un alliage de polyamide.

9. Corps creux rigides constitués d'une structure selon l'une quelconque des revendications 5 à 8.

**Patentansprüche**

1. Coextrusionsbindemittel, enthaltend:

   - mindestens ein Polymer (A), das mindestens 75 Mol-% Ethylen enthält und das ein Verhältnis $MI_2/[\eta]^{-8,77}$ als Absolutwert von mehr als 15 aufweist, wobei das Polymer (A) ein Copolymer von Ethylen und einem alpha-Olefin vom LLDPE- oder VLDPE-Typ ist,

   - mindestens ein Polymer (B), das von dem Polymer (A) verschieden ist und ausgewählt ist aus

- Polymeren (B1), die mindestens 50 Mol-% Ethylen enthalten,

- Styrol-Blockcopolymeren (B2),

wobei das Polymer (B) ein Verhältnis $MI_2/[\eta]^{-8,77}$ als Absolutwert von mehr als 15 aufweist und das Polymer (B) 20 bis 30 Gew.-% an (A) + (B) darstellt,

- wobei die Mischung von (A) und (B) mit einer ungesättigten Carbonsäure oder einem funktionellen Derivat dieser Säure gepfropft ist,

- wobei die cogepfropfte Mischung von (A) und (B) gegebenenfalls in einem Polymer (C) verdünnt ist, das ausgewählt ist aus

- Polymeren (C1) von Ethylenhomo- oder -copolymeren,

- Styrol-Blockcopolymeren (C2),

wobei das Gewicht an (C) höchstens gleich dem Gewicht an gepfropftem (A + B) ist,

- wobei das Bindemittel aufweist:

(a) einen Ethylengehalt, der nicht kleiner als 70 Mol-% ist,

(b) einen Gehalt an Carbonsäure oder ihrem Derivat von 0,01 bis 10 Gew.-% des Bindemittels und

(c) ein Verhältnis $MI_{10}/M_2$ von 5 bis 20, wobei $MI_2$ die Fließzahl in geschmolzener Masse bei 190 °C unter einer Last von 2,16 kg, gemessen gemäß ASTM D1238, darstellt und $MI_{10}$ die Fließzahl in geschmolzener Masse bei 190 °C unter einer Last von 10 kg, gemessen gemäß ASTM D1238, darstellt, wobei die intrinsische Viskosität $[\eta]$ die Viskositätszahl dl/g eines Polymers, gemessen in einer Dekalinlösung bei 135 °C, bezeichnet.

2. Bindemittel nach Anspruch 1, wobei (B) ein Ethylen/Propylen- oder ein Ethylen/1-Buten-Elastomer darstellt.

3. Bindemittel nach einem der vorhergehenden Ansprüche, wobei (C) ausgewählt ist aus der Familie des Polymers (A).

4. Mehrschichtige Struktur, die eine Schicht aufweist, die das Bindemittel nach einem der vorhergehenden Ansprüche aufweist und an die eine Schicht (E) eines stickstoffhaltigen oder sauerstoffhaltigen polaren Harzes, wie eine Schicht eines Polyamidharzes, eines verseiften Ethylen/Vinylacetat-Copolymers (EVOH) oder eines Polyesterharzes oder aber eine Metallschicht direkt gebunden ist.

5. Struktur nach Anspruch 4, wobei von der Seite des Bindemittels entweder eine Schicht (F) eines Polyolefins oder eine Schicht eines Harzes, ausgewählt aus den Harzen der Schicht (E), oder eine Metallschicht direkt gebunden ist.

6. Struktur nach Anspruch 5, aufweisend jeweils eine Polyethylenschicht hoher Dichte, eine Schicht des erfindungsgemäßen Bindemittels und eine Schicht eines Polyamids oder einer Polyolefin/Polyamid-Mischung.

7. Struktur nach Anspruch 5, aufweisend jeweils eine PEHD-Schicht, eine Schicht des erfindungsgemäßen Bindemittels, eine EVOH-Schicht oder eine Schicht einer EVOH-Mischung, eine Schicht des erfindungsgemäßen Bindemittels und eine PEHD-Schicht.

8. Struktur nach Anspruch 5, aufweisend jeweils eine Polypropylenschicht, eine Schicht eines gepfropften Polypropylens als Bindemittel, eine EVOH-Schicht, eine Schicht des erfindungsgemäßen Bindemittels und eine Schicht eines Polyamids oder einer Polyamidmischung.

9. Feste Hohlkörper, bestehend aus einer Struktur nach einem der Ansprüche 5 bis 8.

**Claims**

1. Coextrusion tie comprising:

 - at least one polymer (A) comprising at least 75 mol% of ethylene and having an $MFI_2/[\eta]^{-8.77}$ ratio of greater than 15 in absolute value, (A) being an ethylene/alpha-olefin copolymer of the LLDPE or VLDPE type;
 - at least one polymer (B) different from A, chosen from:

   - polymers (B1) comprising at least 50 mol% of ethylene,
   - styrene block copolymers (B2),
     where (B) has an $MFI_2/[\eta]^{-8.77}$ ratio of greater than 15 in absolute value and the polymer (B) represents 20 to 30% by weight of (A) + (B);

 - the blend of (A) and (B) being grafted by an unsaturated carboxylic acid or a functional derivative of this acid;
 - the cografted blend of (A) and (B) being optionally diluted in a polymer (C) chosen from:

   . ethylene polymers (C1), either homopolymers or copolymers,
   . styrene block copolymers (C2),
     where the weight of (C) is at most equal to the weight of the grafted (A + B);

 - the tie having:

   (a) an ethylene content which is no less than 70 mol%,
   (b) a carboxylic acid content, or content of carboxylic acid derivative, of 0.01 to 10% by weight of the tie and
   (c) an $MFI_{10}/MFI_2$ ratio of 5 to 20, where $MFI_2$ is the melt flow index at 190°C under a load of 2.16 kg, measured according to ASTM D1238, and $MFI_{10}$ is the melt flow index at 190°C under a load of 10 kg measured according to ASTM D1238, the intrinsic viscosity $[\eta]$ denoting the viscosity index in dl/g of a polymer measured in a decalin solution at 135°C.

2. Tie according to Claim 1, in which (B) is an ethylene/propylene or ethylene/1-butene elastomer.

3. Tie according to either of the preceding claims, in which (C) is chosen from the polymer (A) family.

4. Multilayer structure including a layer comprising the tie of any one of the preceding claims and, directly attached to the said layer, a layer (E) of nitrogen-containing or oxygen-containing polar resin, such as a layer of polyamide resin, of a saponified ethylene/vinyl acetate copolymer (EVOH) or of a polyester resin, or a metal layer.

5. Structure according to Claim 4, in which either a polyolefin layer (F), or a layer of a resin chosen from the resins of the layer (E), or a metal layer is attached directly on the tie side.

6. Structure according to Claim 5, comprising a layer of high-density polyethylene, a layer of the tie of the invention and a layer of polyamide or of a polyolefin/polyamide alloy, respectively.

7. Structure according to Claim 5, comprising a layer of HDPE, a layer of the tie of the invention, a layer of EVOH or an EVOH alloy, a layer of the tie of the invention and a layer of HDPE, respectively.

8. Structure according to Claim 5, comprising a layer of polypropylene, a layer of grafted polypropylene as tie, a layer of EVOH, a layer of the tie of the invention and a layer of polyamide or of a polyamide alloy, respectively.

9. Rigid hollow bodies formed from a structure according to any one of Claims 5 to 8.